Europäisches Patentamt

European Patent Office

Office européen des brevets

(19)

(11) Veröffentlichungsnummer: **0 538 560 A2**

(12) **EUROPÄISCHE PATENTANMELDUNG**

(21) Anmeldenummer: **92112034.1**

(22) Anmeldetag: **15.07.92**

(51) Int. Cl.5: **C08G 65/26**, C08F 293/00

(30) Priorität: **23.10.91 DE 4134967**

(43) Veröffentlichungstag der Anmeldung:
**28.04.93 Patentblatt 93/17**

(84) Benannte Vertragsstaaten:
**BE DE FR GB IT NL**

(71) Anmelder: **Th. Goldschmidt AG**
**Goldschmidtstrasse 100 Postfach 101461**
**W-4300 Essen 1(DE)**

(72) Erfinder: **Fock, Jürgen, Dr.**
**Mörsenbroicher Weg 114**
**W-4000 Düsseldorf 30(DE)**

(54) **Polyvinyl-Polyoxyalkylen-Blockmischpolymerisate.**

(57)  Blockmischpolymerisate des Typs A-B, deren Block A durch Polymerisation von Vinylgruppen aufweisenden Verbindungen gebildet ist und deren Block B ein Polyoxyalkylenblock ist, dadurch erhältlich, daß man zuerst Vinylgruppen aufweisende Monomere in Gegenwart ausreichender Mengen eines Initiators und der gewünschten Kettenlänge entsprechenden Mengen eines Kettenreglers, welcher neben einer Mercaptogruppe noch eine weitere, mindestens einen aktiven Wasserstoffrest aufweisende funktionelle Gruppe trägt, bei Temperaturen von 60 bis 150°C radikalisch polymerisiert und an das derart modifizierte Polymerisat Alkylenoxid, gegebenenfalls in Gegenwart eines an sich bekannten Anlagerungskatalysators, bis zum Erreichen des gewünschten Molgewichts des Blocks B bei Temperaturen von 20 bis 180°C addiert.

EP 0 538 560 A2

Rank Xerox (UK) Business Services
(3.10/3.5x/3.0.1)

Die Erfindung betrifft Blockmischpolymerisate des Typs A-B, deren Block A durch Polymerisation von Vinylgruppen aufweisenden Verbindungen gebildet ist und deren Block B ein Polyoxyalkylenblock ist.

Blockcopolymerisate aus Styrol oder 2-Vinylpyridin und Ethylenoxid sind aus Encycl. of Polymer Sci. & Eng. 2, 334 bekannt. Sie werden in einem zweistufigen Verfahren dadurch hergestellt, daß man zunächst durch anionische Polymerisation der Vinylverbindungen in Gegenwart von Alkyl- oder Arylalkaliverbindungen, wie Butyllithium, den Vinylblock A herstellt, an den in einem zweiten Schritt Alkylenoxid angelagert wird.

Das Verfahren der anionischen Polymerisation der Vinylmonomeren hat aber mehrere grundsätzliche Nachteile, auf die in Encycl. of Polymer Sci. & Eng. 2, 330 hingewiesen wird: Es ist notwendig, hochreine Agentien und Lösungsmittel zu verwenden. Man muß im Hochvakuum oder mit hochgereinigtem Schutzgas arbeiten. Bei der anionischen Polymerisation sind sehr niedrige Temperaturen einzuhalten. Es läßt sich nur eine begrenzte Anzahl von Monomeren anionisch polymerisieren.

Blockcopolymerisate aus Polystyrol oder Polyvinylpyridin und Alkylenoxiden stellen eine interessante Klasse von grenzflächenaktiven Verbindungen dar, die z.B. in Tenside Surf. Det. 28 (1991) 3 beschrieben ist. Sie sind wirkungsvolle Emulgatoren für die Emulsionspolymerisation und ergeben einen stabilen Polymerlatex mit modifizierten Oberflächeneigenschaften, die unter Verwendung von konventionellen Emulgatoren nicht leicht zu erzielen sind. Unter Verwendung dieser Blockpolymerisate gelingt es, wasserlösliche Monomere, wie z.B. Acrylamid, in Wasser-in-Öl-Mikroemulsionen zu polymerisieren.

Der Erfindung liegt deshalb das technische Problem zugrunde, neuartige Polyvinyl-Polyoxyalkylen-Blockmischpolymerisate zu finden, welche leicht zugänglich sind und dabei die gewünschten oberflächenaktiven Eigenschaften von Polymertensiden aufweisen. Es sollte insbesondere ein Herstellungsverfahren entwickelt werden, welches die Verwendung spezieller Reinigungsschritte für die Reagentien und die Einhaltung tiefer Temperaturen überflüssig macht. Hierdurch soll die Herstellung dieser anwendungstechnisch interessanten Verbindungen vereinfacht und so verbilligt werden, daß diese auch wirtschaftlich verwertbar werden.

Aus J. Polym. Sci. Teil A: Polym. Chem. 27 (6) 1883-90 ist es bekannt, hydroxyterminiertes Poly(2-dimethylaminoethylmethacrylat) durch radikalische Polymerisation in Gegenwart von 1-Mercaptoethan-2-ol herzustellen. Das erhaltene hydroxyterminierte Polymere dient als Vorstufe für die Herstellung von Blockcopolymeren, wobei die hydroxyterminierten Polymeren mit einem carboxyfunktionellen Polymethylmethacrylat verestert werden. Die Herstellung von Blockcopolymerisaten der eingangs beschriebenen Art läßt sich dieser Literaturstelle jedoch nicht entnehmen.

Gegenstand der Erfindung sind somit Blockmischpolymerisate des Typs A-B, deren Block A durch Polymerisation von Vinylgruppen aufweisenden Verbindungen gebildet ist und deren Block B ein Polyoxyalkylenblock ist, welche dadurch erhältlich sind, daß man zuerst Vinylgruppen aufweisende Monomere in an sich bekannter Weise in Gegenwart ausreichender Mengen eines Initiators und der gewünschten Kettenlänge entsprechenden Mengen eines Kettenreglers, welcher neben einer Mercaptogruppe noch eine weitere, mindestens einen aktiven Wasserstoffrest aufweisende funktionelle Gruppe trägt, bei Temperaturen von 60 bis 150°C radikalisch polymerisiert und an das derart modifizierte Polymerisat Alkylenoxid, gegebenenfalls in Gegenwart eines an sich bekannten Anlagerungskatalysators, bis zum Erreichen des gewünschten Molgewichts des Blocks B bei Temperaturen von 20 bis 180°C addiert.

Das Polymerisat des Blockes A wird dabei vorzugsweise durch radikalische Polymerisation der Vinylgruppen aufweisenden Vinylverbindungen in Gegenwart eines Lösungsmittels und/oder überschüssiger Mengen des Monomeren hergestellt, wobei nach der Herstellung des Blockes A überschüssige monomere Vinylverbindungen und gegebenenfalls das vorhandene Lösungsmittel partiell oder vollständig vom erhaltenen Polymerisat entfernt werden.

Den verwendeten Kettenreglern kommt bei dem Gegenstand vorliegender Erfindung besondere Bedeutung zu. Sie müssen einerseits eine Mercaptogruppe aufweisen, damit die radikalische Polymerisation in der gewünschten Weise abläuft. Sie müssen andererseits mindestens eine zweite Gruppe mit aktivem Wasserstoff aufweisen, an welcher in der zweiten Verfahrensstufe Alkylenoxid angelagert werden kann. Die Kettenregler sind somit das Brückenglied, welches den Block A mit dem Block B verbindet. Beispiele solcher funktionellen Gruppen mit aktivem Wasserstoff sind die Hydroxyl-, Carboxyl- und Aminogruppe. Die Aminogruppe kann dabei mit einer Alkylgruppe monosubstituiert sein.

Beispiele geeigneter Kettenregler sind Mercaptoalkanole, wie 1-Mercaptoethan-2-ol, 1-Mercaptobutan-4-ol, 1-Mercaptohexan-6-ol und Mercaptomethylbenzylalkohol, Mercaptocarbonsäuren, wie Mercaptoessigsäure oder mercaptofunktionelle sekundäre Amine, wie 2-Mercaptoethyl-n-butylamin. Besonders bevorzugt ist 1-Mercaptoethan-2-ol. Im Hinblick auf die höhere Hydrolysestabilität der erhaltenen Blockpolymere sind die Mercaptoalkanole den Mercaptocarbonsäuren überlegen und werden bevorzugt eingesetzt.

Die Kettenregler werden zur Erzielung der gewünschten Kettenlänge in Mengen von 0,001 Mol bis 0,5 Mol je Mol Vinylgruppen enthaltende Verbindungen, vorzugsweise in Mengen von 0,005 bis 0,1 Mol je Mol Vinylgruppen enthaltende Verbindungen, verwendet.

Beispiele von Vinylgruppen aufweisenden Monomeren sind solche, die radikalisch polymerisieren, wie Styrol, Alkylstyrol, Cyclohexylmethacrylat, tert.-Butylacrylat, Butadien, Isopren, Vinylcyclohexan, N-Vinylpyrrolidon, Vinylimidazol, Methylmethacrylat, Butylmethacrylat, Ethylhexylmethacrylat, Methacrylamid oder Methacrylnitril.

Bevorzugte Vinylmonomere sind Styrol, Alkylstyrol, insbesondere Methylstyrol und p-tert.-Butylstyrol.

Als Initiatoren können die an sich bekannten Polymerisationsinitiatoren, wie Azodiisobuttersäurenitril oder Peroxide, wie Benzoylperoxid, Cumolhydroperoxid, Cyclohexanonperoxid, tert.-Butylperoctoat und Di-tert.-Butylperoxid, verwendet werden.

Die radikalische Polymerisation wird in Gegenwart eines Lösungsmittels, wie Toluol, Xylol, Chlorkohlenwasserstoffen, Tetrahydrofuran, Dioxan oder Methylethylketon, oder in Gegenwart überschüssiger Mengen der Monomeren und in einem Temperaturbereich von 60 bis 150°C, insbesondere 80 bis 120°C, durchgeführt.

Bei der Polymerisation entstehen in der ersten Verfahrensstufe Vinylpolymere, welche endständig das über die Mercaptogruppe gebundene Molekül des Kettenreglers aufweisen. Im Falle der Verwendung von 1-Mercaptoethan-2-ol weisen die Vinylpolymeren endständig die Gruppe $-S-C_2H_4OH$ auf. Im Falle der Verwendung von Mercaptocarbonsäuren als Kettenregler liegt endständig die Gruppe $-S-R-COOH$ vor, wobei R ein zweiwertiger Rest, in der Regel eine Alkylengruppe, ist. Im Falle der Verwendung von mercaptofunktionellen Aminen liegt endständig die Gruppe $-S-R-NH_2$ oder $-S-R-NR'H$ vor (R' = Alkylgruppe, insbesondere mit 1 bis 4 Kohlenstoffatomen). Die Polymeren haben ein durchschnittliches numerisches Molekulargewicht von 250 bis 30 000, vorzugsweise von 1000 bis 10 000.

Die Polymeren werden im allgemeinen durch Destillation von den überschüssigen monomeren Vinylverbindungen befreit, wobei das Lösungsmittel meist nicht entfernt wird.

An das so erhaltene Vinylpolymerisat addiert man nun, gegebenenfalls in Gegenwart an sich bekannter Anlagerungskatalysatoren, bei Temperaturen von 20 bis 180°C Alkylenoxid bis zum Erreichen des gewünschten Molgewichtes.

Als Katalysatoren sind Alkalihydroxide oder Alkalialkoholate geeignet und zwar insbesondere dann, wenn die funktionelle Gruppe des Kettenreglers eine OH- oder COOH-Gruppe ist. Das beim Zusatz der Alkalihydroxide bzw. Alkalialkoholate freigesetzte Wasser bzw. Alkohol wird vor der Anlagerung des Alkylenoxids aus dem Reaktionsgemisch entfernt.

Man kann als Anlagerungskatalysatoren auch kationische Katalysatoren, wie $BF_3$, $BF_3$-Etherat, $SnCl_4$, $FeCl_3$, verwenden.

Ist die funktionelle Gruppe des Kettenreglers, die den aktiven Wasserstoffrest aufweist, eine Aminogruppe, kann die Anlagerung von Alkylenoxid ohne Verwendung eines Katalysators erfolgen, da diese funktionelle Gruppe bereits in der Lage ist, ohne Verwendung eines Katalysators oder Initiators mit Alkylenoxiden zu reagieren.

Als Alkylenoxide kommen insbesondere Ethylenoxid, Propylenoxid und Butylenoxid in Frage. Da der Block B im allgemeinen ausgeprägt hydrophile Eigenschaften aufweisen soll, um ein Copolymerisat mit grenzflächenaktiven Eigenschaften zu erhalten, verwendet man meist als Alkylenoxid Ethylenoxid allein oder in Mischung mit Propylenoxid und/oder Butylenoxid. Im allgemeinen überwiegt der Anteil an Ethylenoxid im Copolymerisat. Sollen unterschiedliche Alkylenoxide angelagert werden, können diese als Gemisch mit statistischer Verteilung oder separat nacheinander blockweise angelagert werden.

Die erhaltenen erfindungsgemäßen Blockmischpolymerisate des Typs A-B weisen am Ende des Blockes B eine OH-Gruppe, die in an sich bekannter Weise derivatisiert werden kann, auf. Man kann die OH-Gruppe zum Beispiel durch Umsetzung mit Alkylhalogenid in die Gruppe O-Alkyl umwandeln. Es ist ferner möglich, durch Umsetzung mit Alkenylhalogeniden, wie Allylchlorid, und nachfolgende Reaktion mit Alkalihydrogensulfit die entsprechenden Sulfonate herzustellen.

Eine weitere Möglichkeit der Derivatisierung besteht in der Umsetzung der endständigen OH-Gruppe mit einem Sulfatierungsagens, wie z.B. Amidosulfonsäure. Hierbei entstehen die entsprechenden Sulfate.

Die erhaltenen erfindungsgemäßen Blockcopolymerisate weisen die gewünschten grenzflächenaktiven Eigenschaften auf. Sie unterscheiden sich von den in Encycl. of Polymer Sci. & Eng. 2, 334 beschriebenen Copolymerisaten durch die die beiden Blöcke verbindende Gruppe des Kettenreglers, die jedoch die grenzflächenaktiven Eigenschaften offenbar nicht oder nur geringfügig und vernachlässigbar beeinflußt.

Die erfindungsgemäßen Blockmischpolymerisate können in an sich bekannter Weise als Polymertenside, insbesondere als Emulgatoren für die Emulsionspolymerisation, eingesetzt werden. Die unter Verwendung der erfindungsgemäßen Polymertenside erhaltenen Emulsionen zeigen hervorragende Stabilität bei Scherbelastung, Kältebeanspruchung und sind weitgehend unempfindlich gegen den Zusatz von Elektrolyten.

Darüber hinaus läßt sich der unerwünschte Anfall von Koagulat sowie das "Anbacken" des Polymerisates an der Reaktorwand vermindern oder vermeiden.

Mit Hilfe der erfindungsgemäßen Blockmischpolymerisate können Mikroemulsionen z.B. in inverser Phase hergestellt werden.

Die erfindungsgemäßen Polymerisate sind ausgezeichnete Polymerdispergatoren für Polymerblends, insbesondere für Polystyrol oder dessen Copolymerisate in Polyolen bzw. für Polyolefine in Polyolen, insbesondere in Polyetherolen.

Die erfindungsgemäßen Blockmischpolymerisate sind außerdem sehr wirkungsvolle Pigmentdispergiermittel in Farbpasten zur Herstellung von Pigmente und/oder Ruß enthaltenden Zubereitungen. Bei Verwendung der erfindungsgemäßen Blockmischpolymerisate kann man das Pigmentaufnahmevermögen von Polyester- und Polyetherolen deutlich erhöhen.

Das erfindungsgemäße Verfahren soll anhand der folgenden Beispiele 1 A bis 7 A bzw. 1 B bis 12 B noch näher erläutert werden. In den anwendungstechnischen Beispielen I bis III werden einige anwendungstechnische Eigenschaften der erfindungsgemäßen Verbindungen zusätzlich beschrieben.

Beispiel 1 A

Herstellung eines $\alpha$-Hydroxypolystyrols (nicht erfindungsgemäß)

100 g Xylol werden unter einer Stickstoffatmosphäre in einem mit einem Rührer versehenen Reaktor auf 120°C erhitzt. Dazu wird innerhalb von drei Stunden unter Aufrechterhaltung der Temperatur von 120°C ein Gemisch aus 1560 g (ca. 15 Mol) Styrol, 78,1 g (ca. 1 Mol) 1-Mercaptoethan-2-ol, 4,1 g Azodiisobuttersäuredinitril und 310 g getrocknetes Xylol gegeben. Nach Beendigung der Zugabe des Gemisches erfolgt eine Nachreaktion für ca. 15 Minuten, anschließend werden 0,16 g Methylhydrochinon zugesetzt.

Durch Fraktionierung im Vakuum (40 bis 50°C/20 Torr) wird überschüssiges Styrol und 1-Mercaptoethan-2-ol vom Xylol abgetrennt. Es wird eine farblose, viskose Lösung des erhaltenen $\alpha$-Hydroxypolystyrols in Xylol mit einer Konzentration von ca. 62 Gew.-% erhalten.

Aus der gelchromatographischen Untersuchung ergibt sich ein numerisches Molekulargewicht

$$\overline{M}_{n_{GPC}}$$

von 870 und für das Gewichtsmittel des Molekulargewichtes

$$\overline{M}_{w_{GPC}}$$

von 1380; der Uneinheitlichkeitskoeffizient beträgt demnach 1,59. Durch Dampfdruckosmometrie wird ein Wert von

$$\overline{M}_{n_{Osm.}}$$

von 820 erhalten. Mit Hilfe des über die Hydroxylzahl ermittelten Molekulargewichtes $M_{OHZ}$ von 875 kann eine Funktionalität von $f_{GPC}$ = 0,99 aus der gelchromatographischen Bestimmung und von $f_{Osm.}$ = 0,94 aus der Dampfdruck-osmometrischen Bestimmung ermittelt werden. Das Gelpermeationschromatogramm zeigt nur ein Maximum.

Beispiele 2 A bis 5 A

Herstellung von α-Hydroxypolystyrolen unterschiedlichen Molekulargewichtes

Es wird grundsätzlich verfahren wie in Beispiel 1 A mit der Ausnahme, daß die Menge an 1-Mercaptoethan-2-ol und an Xylol, wie in Tabelle 1 angegeben, verändert wird. Darüber hinaus werden anstelle von 0,2 Gew.-% Azodiisobuttersäurenitril nur 0,1 Gew.-% eingesetzt.

In Tabelle 1 sind weiterhin die aus der gelchromatographischen Analyse erhaltenen Molekulargewichte

$$\bar{M}_{n_{GPC}},$$

die Uneinheitlichkeitskoeffizienten

$$\bar{M}_{w}/\bar{M}_{n_{GPC}},$$

die aus der Dampfdruckosmometrie und der Hydroxylbestimmung erhaltenen Molekulargewichte

$$\bar{M}_{n_{Osm.}}$$

und $M_{OHZ}$ sowie die Funktionalitäten $f_{GPC}$ und $f_{Osm.}$ angegeben, wobei letztere sich aus den numerischen Molekulargewichten

$$\bar{M}_{n_{GPC}}$$

und

$$\bar{M}_{n_{Osm.}}$$

und dem Molekulargewicht aus der Hydroxylzahl ergeben.

Beispiel 6 A

Herstellung von α-Hydroxypoly-p-tert.-Butylstyrol

Es wird grundsätzlich verfahren wie in Beispiel 1 A mit der Ausnahme, daß anstelle von Styrol p-tert.-Butylstyrol eingesetzt wird. Die Menge des Monomeren, des 1-Mercaptoethan-2-ols und des Xylols und die Molekulargewichte, die Uneinheitlichkeitskoeffizienten und Funktionalitäten sind in Tabelle 1 angegeben. Anstelle von 0,2 Gew.-% Azodiisobuttersäurenitril wird nur 0,1 Gew.-% eingesetzt.

Beispiel 7 A

Herstellung von α-Hydroxystyrol/p-tert.-Butylstyrol-Copolymer

Es wird grundsätzlich verfahren wie in Beispiel 1 A mit der Ausnahme, daß anstelle von Styrol ein Gemisch von Styrol und p-tert.-Butylstyrol im Molverhältnis 1 : 1 eingesetzt wird. Art und Menge der Monomeren, Menge des 1-Mercaptoethan-2-ols, des Xylols, die Molekulargewichte, der Uneinheitlichkeitskoeffizient sowie die Funktionalitäten sind in Tabelle 1 angegeben.

## Tabelle 1

| Beispiel Nr. | Monomer Art | Monomer Menge [g] / [Mol] | | 1-Mercaptoethan-2-ol Menge [g] / [Mol] | | Xylol Menge [g] | $\bar{M}_n$ GPC | $\bar{M}_w/\bar{M}_n$ | $\bar{M}_n$ Osm. | M OHZ | $f_1$ GPC | $f_2$ Osm. |
|---|---|---|---|---|---|---|---|---|---|---|---|---|
| 1 A | St | 1560 / | 15 | 78,1 / | 1,0 | 100 + 310 | 870 | 1,59 | 820 | 875 | 0,99 | 0,94 |
| 2 A | St | 1560 / | 15 | 19,5 / | 0,25[1] | 100 + 380 | 3070 | 1,97 | 2915 | 3105 | 0,99 | 0,94 |
| 3 A | St | 1560 / | 15 | 11,7 / | 0,15[1] | 100 + 450 | 4950 | 2,18 | 4710 | 4750 | 1,04 | 0,99 |
| 4 A | St | 1560 / | 15 | 5,9 / | 0,076[1] | 100 + 500 | 9650 | 2,67 | - | - | - | - |
| 5 A | St | 1560 / | 15 | 2,9 / | 0,037[1] | 100 + 550 | 18500 | 2,95 | - | - | - | - |
| 6 A | tBSt | 2400 / | 15 | 19,5 / | 0,25[1] | 100 + 380 | 2935 | 1,51 | 2820 | 3120 | 0,94 | 0,90 |
| 7 A | St/tBSt | 780 / <br> + 1200 / | 7,5 <br> 7,5 | 78,1 / | 1,00 | 100 + 310 | 1160 | 1,60 | 905 | 1180 | 0,98 | 0,96 |

Legende: St   =  Styrol

tBSt =  p-tert.-Butylstyrol

1) Anstelle von 0,2 Gew.-% Azodiisobuttersäuredinitril werden 0,1 Gew.-% eingesetzt.

EP 0 538 560 A2

Beispiel 1 B

Herstellung eines Polystyrol-Polyethylenoxid-Blockcopolymers (erfindungsgemäß)

Die Lösung von 870 g (ca. 1 Mol) des α-Hydroxypolystyrols aus Beispiel 1 A in 870 g Xylol und 35,0 g (ca. 0,5 Mol) Kaliummethylat werden in einen gut getrockneten Edelstahlreaktor gegeben, der mit einem Rührer versehen ist. Durch azeotrope Destillation werden sowohl Spuren von Wasser als auch Methanol zusammen mit einem Teil des eingesetzten Xylols weitgehend entfernt. Nach sorgfältiger Spülung mit getrocknetem Reinstickstoff wird auf 80°C geheizt und 435 g Ethylenoxid (ca. 19,9 Mol) unter Rühren so schnell zugegeben, daß die Reaktorinnentemperatur 85°C und der Druck 6 bar nicht überschreiten. Nach vollständiger Einleitung des Ethylenoxids wird die Temperatur so lange auf 80°C gehalten, bis daß ein gleichbleibender Druck das Ende der Nachreaktion anzeigt. Schließlich werden bei 80 bis 90°C die nicht umgesetzten Monomere durch partielle Destillation im Vakuum entfernt.

Das erhaltene gelbliche Produkt wird mit ca. 100 g Wasser versetzt und anschließend mit 30 % Phosphorsäure auf einen pH-Wert von etwa 6 bis 7 gebracht. Die Entfernung des Wassers erfolgt durch Destillation im Vakuum und die des ausfallenden Salzes durch Filtration in Gegenwart eines Filterhilfsmittels. Es wird ein leicht gelbliches, viskoses Produkt erhalten.

Das aus der Bestimmung der Hydroxylzahl bei einer angenommenen Funktionalität von 1 ermittelte Molekulargewicht beträgt 1665. Aus der gelchromatographischen Bestimmung ergibt sich für das erhaltene Blockcopolymer ein numerisches Molekulargewicht $\overline{M}_n$ von 1655 und für das Gewichtsmittel $\overline{M}_w$ von 2035; der Uneinheitlichkeitskoeffizient $\overline{M}_w/\overline{M}_n$ beträgt demnach 1,23. Das Gelpermeationschromatogramm zeigt nur ein Maximum.

Beispiele 2 B bis 9 B

Herstellung verschiedener Polystyrol-Polyalkylenoxid-Blockcopolymerer (erfindungsgemäß)

Es wird grundsätzlich wie in Beispiel 1 B verfahren mit der Ausnahme, daß α-Hydroxypolystyrole unterschiedlichen Molekulargewichtes (s. Beispiele 1 A bis 5 A) und Ethylenoxid in unterschiedlicher Menge sowie Gemische aus Ethylenoxid, Propylenoxid und Butylenoxid in unterschiedlicher Menge eingesetzt werden. Die Alkoxylierung höhermolekularer α-Hydroxypolystyrole wird in xylolischer Lösung vorgenommen. In Tabelle 2 sind neben Art und Menge des Vinylpolymerisats, Art und Menge des Alkylenoxids angegeben, wobei sich die Menge des Alkylenoxids, ausgedrückt in Mol, auf ein Mol des Vinylpolymerisats bezieht. Darüber hinaus finden sich in dieser Tabelle das aus der Gelpermeationschromatographie erhaltene numerische Molekulargewicht $\overline{M}_n$ und der Uneinheitlichkeitskoeffizient sowie das aus der Hydroxylzahl bei einer angenommenen Funktionalität von 1 erhaltene Molekulargewicht.

Beispiele 10 B und 11 B

Herstellung verschiedener Poly-tert.-Butylstyrol-Polyalkylenoxid-Blockcopolymerer (erfindungsgemäß)

Es wird grundsätzlich verfahren wie in Beispiel 1 B mit der Ausnahme, daß anstelle von α-Hydroxypolystyrol α-Hydroxypoly-p-tert.-Butylstyrol (Beispiel 6 A) sowie Alkylenoxide in unterschiedlicher Art und Menge eingesetzt werden. In Tabelle 2 sind neben der Gewichtsmenge des Vinylpolymerisates Art und Menge des Alkylenoxids angegeben, wobei sich die Menge des Alkylenoxids, ausgedrückt in Mol, auf ein Mol des Vinylpolymerisats bezieht. Darüber hinaus finden sich in dieser Tabelle das aus der Gelpermeationschromatographie erhaltene numerische Molekulargewicht $\overline{M}_n$ und der Uneinheitlichkeitskoeffizient $\overline{M}_w/\overline{M}_n$ sowie das aus der Hydroxylzahl bei einer angenommenen Funktionalität von 1 erhaltene Molekulargewicht $M_{OHZ}$.

Beispiel 12 B

Herstellung eines Styrol/p-tert.-Butylstyrol-Copolymer-Polyethylenoxid-Blockcopolymers (erfindungsgemäß)

Es wird grundsätzlich verfahren wie in Beispiel 1 B mit der Ausnahme, daß anstelle von α-Hydroxypolystyrol α-Hydroxystyrol-p-tert.-Butylstyrol-Copolymer (Beispiel 7 A) eingesetzt wird. In Tabelle 2 sind die Gewichtsmenge des Vinylpolymerisats und die Menge Ethylenoxid angegeben, wobei sich die Menge des Alkylenoxids, ausgedrückt in Mol, auf ein Mol des Vinylpolymerisats bezieht. Darüber hinaus finden sich in dieser Tabelle das aus der Gelpermeationschromatographie erhaltene numerische Molekulargewicht $\overline{M}_n$ und der Uneinheitlichkeitskoeffizient $\overline{M}_w/\overline{M}_n$ sowie das aus der Hydroxylzahl bei einer angenommenen Funktionalität von 1 erhaltene Molekulargewicht $M_{OHZ}$.

Tabelle 2

| Beispiel Nr. | α-Hydroxypolymer aus Beispiel Nr. | Art | Menge [g] | Angelagertes Alkylenoxid[1] EO [Mol] | PO [Mol] | BO [Mol] | $\overline{M}_n$ GPC | $\overline{M}_w/\overline{M}_n$ GPC | $M_{OHZ}$ |
|---|---|---|---|---|---|---|---|---|---|
| 1 B | 1 A | PSt | 870 | 19,9 | – | – | 1655 | 1,23 | 1665 |
| 2 B | 1 A | PSt | 870 | 4,0 | – | – | 990 | 1,40 | 975 |
| 3 B | 1 A | PSt | 870 | 59,7 | – | – | 3255 | 1,42 | 3020 |
| 4 B | 1 A | PSt | 870 | 10,0 | 10,0 | – | 1800 | 1,32 | 1700 |
| 5 B | 2 A | PSt | 1025 | 69,8 | – | – | 5730 | 1,73 | 5570 |
| 6 B | 2 A | PSt | 1025 | 13,9 | – | – | 3420 | 1,74 | 3320 |
| 7 B | 3 A | PSt | 990 | 112,5 | – | – | 9200 | 1,97 | 8400 |
| 8 B | 4 A | PSt | 965 | 44,0 | – | – | 10980 | 2,35 | – |
| 9 B | 5 A | PSt | 925 | 84,2 | – | – | 21500 | 2,82 | – |
| 10 B | 6 A | PBSt | 980 | 66,7 | – | – | 5430 | 1,85 | 5120 |
| 11 B | 6 A | PBSt | 980 | 33,3 | 33,3 | – | 5910 | 1,82 | 5660 |
| 12 B | 7 A | St/tBSt-Co | 1160 | 19,5 | 3,4 | – | 2100 | 1,42 | 2030 |

1) bezogen auf 1 Mol α-Hydroxypolymer

Legende:

| | | |
|---|---|---|
| PSt | = | α-Hydroxypolystyrol |
| PBSt | = | Poly-p-tert.-Butylstyrol |
| St/tBSt-Co | = | Styrol-p-tert.-Butylstyrol-Copolymer |
| EO | = | Ethylenoxid |
| PO | = | Propylenoxid |
| BO | = | Butylenoxid |

Beispiel 1 C

Herstellung eines mit einer endständigen Ammoniumsulfatgruppe versehenen Polystyrol-Polyethylenoxid-Blockcopolymeren

1030 g (ca. 0,5 Mol) des Polystyrol-Polyethylenoxid-Blockcopolymeren aus Beispiel 1 B werden in 250 g Toluol gelöst und das Toluol zur Entfernung von Wasser in einem Temperaturbereich von 80 bis 115°C unter Vakuum wieder abdestilliert. Anschließend werden 50,4 g (ca. 0,52 Mol) Amidosulfonsäure für ca. 0,5 h bei 115°C unter Reinstickstoff zugegeben und nachfolgend für 2 h auf 120°C erhitzt. Schließlich wird nach Abkühlung auf 70°C durch Zugabe von ca. 2,5 g 35 %iger wäßriger Ammoniaklauge neutralisiert, wobei ein pH-Wert von ca. 7 resultiert. Aus der $C^{13}$-NMR-spektroskopischen Bestimmung der Hydroxylzahl ergibt sich ein Umsatz von ca. 96 % d.Th.

Beispiel 2 C

Herstellung eines mit einer endständigen Natriumsulfonatgruppe versehenen Polystyrol-Polyethylenoxid-Blockcopolymeren

1030 g (ca. 0,5 Mol) des Polystyrol-Polyethylenoxid-Blockcopolymeren aus Beispiel 1 B werden gemäß Beispiel 1 C getrocknet. Anschließend werden 12 g (ca. 0,5 Mol) metallisches Natrium unter Reinstickstoff bei 105°C in kleinen Portionen über 3 h zugegeben. Nach einer anschließenden Verweilzeit von ca. 3 h bei 105°C ist die Reaktion beendet. Nachfolgend werden bei einer Temperatur von 70°C dem gebildeten Alkoholat 45,3 g (ca. 0,6 Mol) Allylchlorid tropfenweise zugegeben, anschließend wird auf 120°C erwärmt und noch für 0,5 h gerührt. Das überschüssige Allylchlorid wird über 3 h bei 100°C abdestilliert.

Zur Neutralisation werden 100 g Wasser bei 80°C zugesetzt und mit 30 %iger Phosphorsäure auf einen pH-Wert von ca. 7 eingestellt. Nach Zugabe von 10 g Celite® T 208 als Filterhilfsmittel wird bei 110°C und 10 Torr das Wasser abdestilliert und anschließend filtriert. Über die Ermittlung des Hydroxylzahl wird ein Umsatz von 92 % d.Th. errechnet.

1067 g (ca. 0,5 Mol) des erhaltenen veretherten Produktes werden in einem Gemisch aus 1700 g Wasser und 630 g Ethanol gelöst. Zu dieser Lösung werden 0,05 g Manganacetat gegeben und danach eine Lösung von 104,5 g (ca. 0,55 Mol) $Na_2S_2O_5$ in 210 g Wasser über 3 h unter gleichzeitigem Einleiten von Luftsauerstoff zugetropft. Während der Zugabe des Bisulfits wird der pH-Wert durch vorsichtige Zugabe von 30 %iger wäßriger Natronlauge in einem Bereich von 7 bis 7,5 gehalten. Anschließend wird bei 80°C und 10 Torr das Wasser abdestilliert, mit 200 g Toluol verdünnt und in Gegenwart von 10 g Celite® T 208 filtriert. Aus der Schwefelbestimmung durch Elementaranalyse ergibt sich ein Umsatz von 91 % d.Th.

Die folgenden Beispiele dienen der Demonstration der anwendungstechnischen Eigenschaften der erfindungsgemäßen Verbindungen.

Beispiel I

Herstellung und Beurteilung einer Pigmentpaste für die Einfärbung von Polyurethanschaumstoffen

7,5 g Farbruß mit einer BET-Oberfläche von 45 m$^2$/g werden in 42,5 g einer 6 %igen Lösung des erfindungsgemäßen Blockcopolymers aus Beispiel 2 B in einem auf Adipinsäure und Propandiol-1,2 basierenden Polyester mit der Hydroxylzahl 68 auf einem Schüttelgerät mit Glaskugeln eines Durchmessers von 2 mm innerhalb von 30 Minuten dispergiert.

Man erhält eine sehr homogene, fließfähige Paste, die sich durch hohe Flockungsbeständigkeit auszeichnet. Sie ist insbesondere für die Einfärbung von Polyurethanschaumstoffen geeignet.

Beispiel II

Herstellung und Beurteilung einer Pigmentpaste für die Einfärbung von Polyesterpolyurethanschaumstoffen

9 g eines Kupferphthalocyanins der $\alpha$-Modifikation werden mit einer Lösung von 25 g des Blockcopolymeren von Beispiel 12 B in 400 g eines auf Phthalsäure, Triethylenglykol und Isononylalkohol basierenden Polyesters vermischt. Die Vermischung geschieht in einer kontinuierlich arbeitenden Rührwerksmühle in Gegenwart von Stahlperlen mit einem Durchmesser von 2 mm.

Man erhält eine sehr gut fließfähige Pigmentpaste, mit der in Polyesterpolyurethanschaumstoffen eine hohe Farbtiefe erreicht wird.

Beispiel III

Herstellung und Beurteilung einer Toner-Formulierung

Toner sind Formulierungen, die in elektrostatischen Bildsystemen eingesetzt werden. In diese Formulierung werden Additive eingesetzt, die brechungserhöhend wirken. Diese Additive binden wirkungsvoll Salze, die den Tonerpartikeln eine positive oder negative Ladung verleihen. Darüber hinaus müssen die Verbindungen nicht-toxisch, thermisch stabil und homogen dispergierbar sein. Dieses Beispiel zeigt die Herstellung einer positiv geladenen Toner-Formulierung.

6 g Ruß (Regal® 300) und 10 g des Blockpolymers aus Beispiel 8 B werden zunächst mit 1 g Kaliumrhodanid vermischt. Anschließend wird die Vormischung in der Schmelze mit 84,6 g Polystyrol (Styren® 686) homogenisiert.

Die entstandene Mischung wird nunmehr mit einem Träger aus mit einem Vinylfluorid-Vinylchlorid-Copolymer (FPC 461) beschichteten Ferrit-Teilchen vermischt. Mit der resultierenden Zubereitung wird eine positive tribo-elektrostatische Ladung von mehr als 32 Microcoulomb erhalten.

Beispiel IV

Herstellung und Beurteilung eines Emulsionspolymerisates

Eine Mischung aus
500 g deionisiertem Wasser
1,72 g Natriumdodecylsulfat
1,32 g Natriumpyrophosphat
3,3 g Acrylamid
46,7 g Styrol
50,2 g n-Butylacrylat
3,0 g Acrylsäure
9,66 g Kaliumperoxidisulfat, gelöst in 140,2 g Wasser
wird in einem 2-l-Reaktor unter Reinstickstoff bei 75°C gerührt. Eine Stunde nach Beginn der Polymerisation werden 7 g des Blockcopolymeren aus Beispiel 1 C, gelöst in 35 g Wasser, zugegeben. Anschließend wird über 6 h ein Gemisch aus
259,2 g Styrol
281,8g n-Butylacrylat
16,9 g Acrylsäure
tropfenweise zugegeben.

EP 0 538 560 A2

Nach Ende der Polymerisation wird die Temperatur noch für 2 h bei 75°C gehalten.

Die erhaltene Dispersion hat einen Feststoffgehalt von ca. 50 %, der mittlere Partikeldurchmesser beträgt etwa 0,12 μm, der durch Filtration mit Hilfe eines 75-μm-Siebes und anschließender Trocknung bestimmte Koagulatanteil beträgt 0,005 % der an der Reaktorwand befindliche Anteil beträgt 0,010 %.

Im Vergleichsversuch werden anstelle des erfindungsgemäßen Blockcopolymeren 7 g eines Nonylphenolethoxylats mit 9 Einheiten Ethylenoxid eingesetzt. Der Koagulatanteil beträgt in diesem Fall 0,1 % und die an der Reaktorwand gefundene Menge 0,5 %.

**Patentansprüche**

1. Blockmischpolymerisate des Typs A-B, deren Block A durch Polymerisation von Vinylgruppen aufweisenden Verbindungen gebildet ist und deren Block B ein Polyoxyalkylenblock ist, dadurch erhältlich daß man zuerst Vinylgruppen aufweisende Monomere in an sich bekannter Weise in Gegenwart ausreichender Mengen eines Initiators und der gewünschten Kettenlänge entsprechenden Mengen eines Kettenreglers, welcher neben einer Mercaptogruppe noch eine weitere, mindestens einen aktiven Wasserstoffrest aufweisende funktionelle Gruppe trägt, bei Temperaturen von 60 bis 150°C radikalisch polymerisiert und an das derart modifizierte Polymerisat Alkylenoxid, gegebenenfalls in Gegenwart eines an sich bekannten Anlagerungskatalysators, bis zum Erreichen des gewünschten Molgewichts des Blocks B bei Temperaturen von 20 bis 180°C addiert.

2. Blockmischpolymerisat nach Anspruch 1, dadurch gekennzeichnet, daß der Block A durch radikalische Polymerisation der Vinylgruppen aufweisenden Vinylverbindungen in Gegenwart eines Lösungsmittels und/oder überschüssiger Mengen des Monomeren gebildet wobei nach der Herstellung des Blockes A überschüssige monomere Vinylverbindungen und gegebenenfalls das vorhandene Lösungsmittel partiell oder vollständig vom erhaltenen Polymerisat entfernt werden.

3. Blockmischpolymerisat nach Anspruch 1 oder 2, dadurch gekennzeichnet, daß der Block A durch Polymerisation von einer oder mehreren der Verbindungen, ausgewählt aus der Gruppe Styrol und Alkylstyrol, gebildet ist.

4. Blockmischpolymerisat nach Anspruch 1, 2 oder 3, dadurch gekennzeichnet, daß man die Vinylgruppen aufweisenden Monomeren in Gegenwart eines Kettenreglers polymerisiert, welcher neben einer Mercaptogruppe eine Hydroxyl-, Carboxyl- oder eine, gegebenenfalls monoalkylsubstituierte, Aminogruppe aufweist.

5. Blockmischpolymerisat nach Anspruch 4, dadurch gekennzeichnet, daß man in Gegenwart von 1-Mercaptoethan-2-ol als Kettenregler polymerisiert.

6. Blockmischpolymerisat nach einem oder mehreren der vorhergehenden Ansprüche, dadurch gekennzeichnet, daß der Block B aus Oxyethylen- und/oder Oxypropylen- und/oder Oxybutyleneinheiten in Blockanordnung oder in statistischer Verteilung gebildet ist.

7. Verwendung der Verbindungen des Anspruchs 1 als Polymertenside, insbesondere als Emulgiermittel für die Emulsionspolymerisation, als Polymerdispergatoren für Polymerblends und als Dispergiermittel für Pigmente in Farbpasten und Pigmente und/oder Ruß enthaltenden Zubereitungen.

11